# EUROPÄISCHE PATENTSCHRIFT

(11) **EP 3 294 463 B1**
(45) Veröffentlichungstag und Bekanntmachung des Hinweises auf die Patenterteilung: **06.03.2019**
(21) Anmeldenummer: 16719772.2
(22) Anmeldetag: 27.04.2016
(51) Int. Cl.: B05C 9/14, F26B 3/04, F26B 15/16, F26B 21/00, F26B 25/00, B05B 16/20, B05B 13/02, B62D 65/18

(54) **TEMPERIERVORRICHTUNG ZUM TEMPERIEREN VON WERKSTÜCKEN**
TEMPERATURE CONTROL DEVICE FOR CONTROLLING THE TEMPERATURE OF WORKPIECES
DISPOSITIF DE MISE À TEMPÉRATURE DE PIÈCES

(30) Priorität: 09.05.2015 DE 102015006098
(43) Veröffentlichungstag der Anmeldung: 21.03.2018
(73) Patentinhaber: Eisenmann SE, 71032 Böblingen (DE)
(72) Erfinder: ROBBIN, Jörg, 72119 Ammerbuch-Pfäffingen (DE)
(74) Vertreter: Ostertag & Partner Patentanwälte mbB
(86) Internationale Anmeldenummer: PCT/EP2016/000677
(87) Internationale Veröffentlichungsnummer: WO 2016/180516

(56) Entgegenhaltungen:
- DE-A1-102006 010 688
- DE-A1-102010 045 010
- US-A1- 2006 054 049

## Beschreibung

Die Erfindung betrifft eine Temperiervorrichtung zum Temperieren von Werkstücken, insbesondere zum Trocknen von Fahrzeugkarosserien, mit den Merkmalen des Oberbegriffs des Anspruchs 1.

Eine derartige Vorrichtung ist aus DE102010045010 A1 bekannt.

Wenn vorliegend von "Temperieren" eines Werkstückes gesprochen wird, so ist hiermit die Herbeiführung einer bestimmten Temperatur des Werkstückes gemeint, die dieses zunächst noch nicht besitzt. Es kann sich um eine Temperaturerhöhung oder eine Temperaturverringerung handeln.

Ein in der Automobilindustrie häufiger Fall des Temperierens, nämlich des Erwärmens, von Werkstücken und insbesondere von Fahrzeugkarosserien ist der Vorgang des Trocknens der Beschichtung einer Fahrzeugkarosserie. Dabei kann es sich zum Beispiel um einen Lack oder einen Klebstoff oder dergleichen handeln. Die nachfolgende Beschreibung der Erfindung im Detail erfolgt am Beispiel eines solchen Trockners.

Bei vom Markt her bekannten Temperiervorrichtungen bzw. Trocknern, die im Durchlauf betrieben werden, werden die Transportwagen mit einem zentralen Antriebssystem, wie beispielsweise einem Kettenzug oder dergleichen, gekoppelt. Alle Werkstücke werden dabei in gleicher Weise getaktet oder kontinuierlich bewegt und die Verweildauer im Temperiertunnel ist für alle Werkstücke gleich.

Es kann jedoch vorkommen, dass für verschiedene Werkstücke unterschiedliche Temperierungen erfolgen sollen oder müssen, bei welchen die Temperaturen und/oder die Verweildauer in der Tunnelatmosphäre für die Werkstücke verschieden sein kann. Derartige unterschiedliche Anforderungen können bei solchen Temperiervorrichtung jedoch nur erschwert umgesetzt werden. Insbesondere ist es kaum möglich, bei zwei aufeinanderfolgend durch den Temperiertunnel geförderten Werkstücken unterschiedliche Behandlungen zu realisieren.

Es ist daher Aufgabe der Erfindung, eine Temperiervorrichtung der eingangs genannten Art zu schaffen, welche diesen Gedanken Rechnung trägt.

Diese Aufgabe wird gelöst durch eine Temperiervorrichtung mit den Merkmalen des Anspruchs 1.

Auf diese Weise können zwei aufeinanderfolgend durch den Temperiertunnel zu fördernde Werkstücke individuell durch die Temperiervorrichtung geführt werden. Gegebenenfalls können der Werkstücke auch leicht auf unterschiedlichen Förderstrecken durch den Temperiertunnel gefördert werden, was bei einem zentralen Antriebssystem nicht ohne weiteres möglich ist, da die Transportwagen dazu von einem ersten Antriebssystem für eine erste Strecke entkoppelt und mit einem zweiten Antriebssystem für eine zweite Strecke gekoppelt werden müssen.

Der Tunnelboden weist dabei einen Verbindungsdurchgang auf und es ist ein unterhalb des Temperiertunnels angeordneter Fahrraum für das Transportwagen-Fahrwerk vorhanden, derart, dass das Transportwagen-Fahrwerk im Fahrraum bewegbar ist, wobei die Befestigungseinrichtung im Temperiertunnel mitgeführt wird und sich die Verbindungseinrichtung durch den Verbindungsdurchgang hindurch erstreckt. Auf diese Weise können die gegenüber äußeren Einflüssen empfindlichen Antriebskomponenten gut am Fahrwerk gelagert sein, da dieses so von der Tunnelatmosphäre getrennt bewegt werden kann.

Vorzugsweise umfasst das Antriebssystem wenigstens eine Antriebsrolle, die von dem Transportwagen-Fahrwerk gelagert und auf einer Antriebslauffläche des Schienensystem abrollbar ist, und wenigstens einen Antriebsmotor für die wenigstens eine Antriebsrolle, welcher von dem Transportwagen-Fahrwerk mitgeführt wird.

Grundsätzlich können die Transportwagen im Fahrraum in an und für sich bekannter Art und Weise über Schleifleitungen an dem Schienensystem mit Energie versorgt werden, wozu die Transportwagen entsprechende Stromabnehmer mit sich führen.

Besonders von Vorteil ist es, wenn der Transportwagen eine autarke Energieversorgungseinrichtung mit sich führt, mittels welcher der wenigstens eine Antriebsmotor mit Energie versorgbar ist. Auf diese Weise kann auf eine Installation zur Energieversorgung entlang des Schienensystems verzichtet werden. Eine Störung der Energieversorgung eines Transportwagens beschränkt sich dann stets auf den Transportwagen selbst, so dass ein solcher defekter Transportwagen oder dessen Komponenten der Energieversorgung ausgetauscht werden können, ohne dass andere Transportwagen beeinflusst werden oder Arbeiten am Schienensystem erforderlich sind. Wenn Störungen der Energieversorgung auftreten, wenn der Transportwagen sich außerhalb des Trockners befindet, kann der Transportwagen isoliert von der Transportstrecke und den weiteren Transportwagen gewartet werden, ohne dass das Fördersystem beeinträchtigt wird.

Dabei ist es besonders günstig, wenn die autarke Energieversorgungseinrichtung wenigstens einen wiederaufladbaren Energiespeicher umfasst. Hierfür kommen insbesondere Akkumulatoren oder Kondensatoren in Betracht.

Der Verbindungsdurchgang kann geradlinig oder gewinkelt sein. Wenn die Tunnelatmosphäre weitgehend ungehindert aus dem Temperiertunnel in den Fahrraum einströmen kann, können die Fahrwerke der Transportwagen belastet werden. Um dies zu verhindern, ist insbesondere der gewinkelte Verlauf günstig. In diesem Fall kann eine Art Labyrinthdichtung ausgebildet werden.

Dabei sind Abschirmmittel vorgesehen, durch welche ein Kontakt wenigstens der Transportwagen-Fahrwerke mit der Tunnelatmosphäre durch den Verbindungsdurchgang hindurch zumindest vermindert wird.

Wenn das Transportwagen-Fahrwerk eine in Transportrichtung vorauseilende Vorläufereinheit und eine in Transportrichtung nacheilende Nachläufereinheit umfasst, kann das System kurvengängig ausgebildet werden, wenn die Kopplungsstellen durch entsprechende Drehkupplungen ausgebildet sind.

Mit Blick auf eine Kurvengängigkeit der Transportwagen kann es dann vorteilhaft sein, wenn die Verbindungseinrichtung wenigstens zwei vertikale Gelenkstreben umfasst, welche die Vorläufereinheit und die Nachläufereinheit mit der Befestigungseinrichtung koppeln.

Nachfolgend werden Ausführungsbeispiele der Erfindung anhand der Zeichnungen näher erläutert. In diesen zeigen
- Figur 1: eine perspektivische Ansicht eines Transportsystems für einen Trockner zum Trocknen von Werkstücken, wobei eine Tragschiene eines Schienensystems mit einem darauf verfahrbaren Transportwagen gezeigt ist, welcher ein Transportwagen-Fahrwerk umfasst, das über eine Verbindungseinrichtung mit einer Befestigungseinrichtung für Werkstücke verbunden ist;
- Figur 2: eine perspektivische Ansicht eines Abschnitts eines Trockners zum Trocknen von Werkstücken mit dem Transportsystem nach Figur 1 mit einem Trockentunnel, dessen Tunnelboden einen zu der Verbindungseinrichtung komplementären Verbindungsdurchgang aufweist, der zu einem Fahrraum für das Transportwagen-Fahrwerk führt, wobei die Befestigungseinrichtung im Trockentunnel und das Transportwagen-Fahrwerk im Fahrraum angeordnet sind;
- Figur 3: einen Querschnitt des Trockners nach Figur 2;
- Figur 4: einen Detailschnitt einer abgewandelten Verbindungseinrichtung mit dazu komplementären Verbindungsdurchgang;
- Figur 5: einen Detailschnitt einer nochmals abgewandelten Verbindungseinrichtung mit dazu komplementären Verbindungsdurchgang;
- Figur 6A: einen Detailschnitt der Verbindungseinrichtung und des Verbindungsabschnitts nach den Figuren 2 und 3;
- Figuren 6B bis 6F: der Figur 6A entsprechende Detailschnitte mit verschiedenen Abschirmmitteln;
- Figur 7: eine schematische Draufsicht auf einen Abschnitt des Trockners, durch welchen mehrere Werkstücke in gleichen Abständen und mit gleichen Geschwindigkeiten transportiert werden;
- Figur 8: eine schematische Draufsicht auf einen Abschnitt des Trockners, durch welchen mehrere Werkstücke mit unterschiedlichen Abständen und/oder mit unterschiedlichen Geschwindigkeiten transportiert werden;
- Figur 9: eine schematische Draufsicht auf einen Abschnitt des Trockners, welcher eine Primärzone und eine Sekundärzone umfasst;
- Figur 10: eine schematische Draufsicht auf einen Abschnitt des Trockners, welcher eine Verzweigung umfasst;
- Figur 11: eine schematische Draufsicht auf einen Abschnitt des Trockners, welcher Pufferanordnung umfasst.

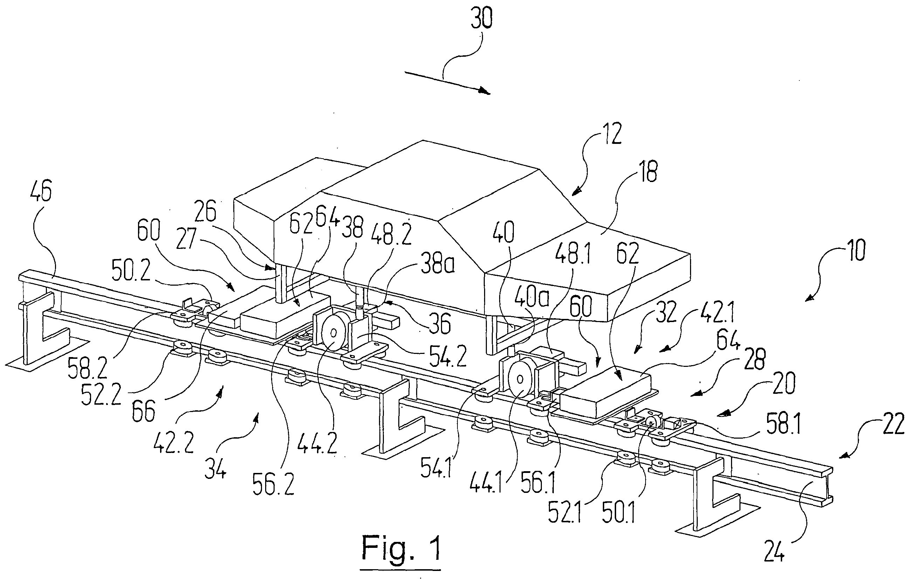

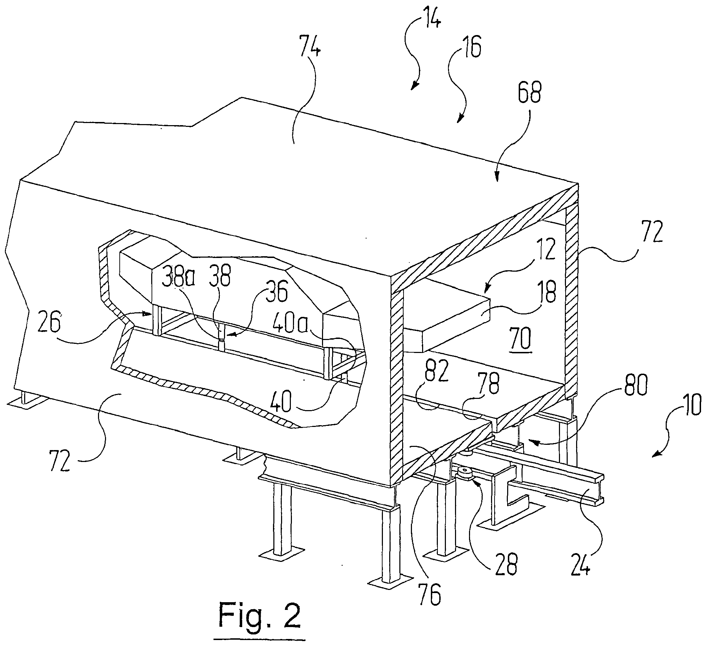

Zunächst wird auf Figur 1 Bezug genommen, in der mit 10 insgesamt ein Transportsystem bezeichnet ist, mit dessen Hilfe Werkstücke 12 durch eine Temperiervorrichtung 14 zum Temperieren der Werkstücke 12 transportiert werden. Als Beispiel für eine solche Temperiervorrichtung 14 ist in den Figuren 2 bis 11 mit 16 allgemein ein Trockner 16 bezeichnet. Als Beispiel für Werkstücke 12 sind in den Figuren 1 bis 5 und 7 bis 11 jeweils Fahrzeugkarosserien 18 gezeigt; bei den Werkstücken 12 kann es sich aber auch um andere Werkstücke und insbesondere um Anbau- oder Aufbauteile von Fahrzeugkarosserien 18 wie Stoßfänger, Seitenspiegel oder dergleichen handeln. Kleinere Werkstücke 12 können gegebenenfalls auf einem nicht eigens gezeigten Werkstückträger angeordnet werden.

Das Transportsystem 10 umfasst eine Vielzahl von Transportwagen 20, auf denen die Werkstücke 12 transportiert werden und welche auf einem Schienensystem 22 verfahren werden. Das Schienensystem 22 des Transportsystems 10 umfasst eine Tragschiene 24, auf welcher der Transportwagen 20 verfährt und welche in an und für sich bekannter Weise als I-Profil ausgebildet und am Boden verankert ist. Die somit bodengebundene Tragschiene 24 ist einspurig. Alternativ kann auch ein mehrspuriges, insbesondere zweispuriges Schienensystem 22 vorhanden sein.

Der Transportwagen 20 umfasst eine Befestigungseinrichtung 26, an welcher eine Fahrzeugkarosserie 18 oder ein entsprechender Werkstückträger für Werkstücke 12 befestigt werden kann. Beim vorliegenden Ausführungsbeispiel ist die Befestigungseinrichtung 26 zur Aufnahme von Fahrzeugkarosserien 18 konzipiert. Hierfür umfasst die Befestigungseinrichtung 26 ein Tragprofil 27 mit in den Figuren nicht zu erkennenden Lagerbolzen, welche in an und für sich bekannter Art und Weise mit Gegenelementen an der Fahrzeugkarosserie 18 zusammenarbeiten, so dass die Fahrzeugkarosserie 18 an der Befestigungseinrichtung 26 fixiert werden kann. Die Befestigungseinrichtung 26 kann auch mehrere Sätze von solchen Lagerbolzen aufweisen, die an unterschiedliche Fahrzeugkarosserien 18 mit verschiedenen Abmessungen und Ausgestaltungen angepasst sind, so dass die Befestigungseinrichtung 26 flexibel für unterschiedliche Fahrzeugkarosserietypen genutzt werden kann.

Die Befestigungseinrichtung 26 nimmt eine Fahrzeugkarosserie 18 somit unmittelbar auf. Bei einem anderen Förderkonzept ist die Fahrzeugkarosserie 18 in an und für sich bekannter Weise auf einem sogenannten Skid befestigt, welcher dann zusammen mit der Fahrzeugkarosserie 18 an der Befestigungseinrichtung 26 angebracht wird.

Der Transportwagen 20 umfasst ein Transportwagen-Fahrwerk 28, welches auf der Tragschiene 24 abläuft und die Befestigungseinrichtung 26 lagert. Beim vorliegenden Ausführungsbeispiel umfasst das Transportwagen-Fahrwerk 28 eine in Transportrichtung 30 vorauseilende Vorläufereinheit 32 und eine in Transportrichtung 30 nacheilende Nachläufereinheit 34. Die Transportrichtung 30 ist lediglich in Figur 1 durch einen Pfeil angedeutet.

Die Vorläufereinheit 32 und die Nachläufereinheit 34, d.h. allgemein das Transportwagen-Fahrwerk 28, sind über eine Verbindungseinrichtung 36 mit der Befestigungseinrichtung 26 gekoppelt. Die Kopplung ist derart eingerichtet, dass der Transportwagen 20 in der Lage ist, auch Kurvenabschnitte der Tragschiene 24 zu durchfahren. Beim vorliegenden Ausführungsbeispiel umfasst die Verbindungseinrichtung 36 zwei vertikale Gelenkstreben 38 bzw. 40, welche die Vorläufereinheit 32 und die Nachläufereinheit 34 mit der Befestigungseinrichtung 26 koppeln. Die Gelenkstreben 38, 40 ermöglichen es durch ein Gelenk 38a bzw. 40a, dass die Befestigungseinrichtung 26 um eine vertikale Drehachse gegenüber der Vorläufereinheit 32 und der Nachläufereinheit 34 verschwenken kann.

Die Vorläufereinheit 32 und die Nachläufereinheit 34 sind weitgehend baugleich, wobei einzelne Bauteile und Komponenten auf einen geraden Abschnitt der Tragschiene 24 bezogen auf eine Ebene senkrecht zur Transportrichtung 30 gespiegelt positioniert sind. Einander entsprechende Bauteile und Komponenten der Vorläufereinheit 32 und die Nachläufereinheit 34 tragen dieselben Bezugszeichen mit den Indizes ".1" bzw. ".2". Die Vorläufereinheit 32 bildet eine Fahrwerkeinheit 42.1 und die Nachläufereinheit 34 bildet eine Fahrwerkeinheit 42.2 des Transportwagen-Fahrwerks 28 des Transportwagens 20.

Nachfolgend wird nun die Vorläufereinheit 32 erläutert; das hierzu Gesagte gilt sinngemäß entsprechend für die Nachläufereinheit 34. Die Vorläufereinheit 32 lagert eine Antriebsrolle 44.1, welche auf einer Antriebslauffläche 46 der Tragschiene 24 abrollt und mittels eines Antriebsmotors 48.1 angetrieben wird, der von der Vorläufereinheit 32 mitgeführt wird. Beim vorliegenden Ausführungsbeispiel ist die Antriebslauffläche 46 der Tragschiene 24 die Fläche auf der Oberseite des I-Profils und verläuft entsprechend in horizontalen Abschnitten der Tragschiene 24 ebenfalls horizontal. Bei nicht eigens gezeigten Abwandlungen kann die Antriebslauffläche 46 auch zum Beispiel vertikal verlaufen; in diesem Fall drückt die Antriebsrolle 44.1 als Reibrad seitlich gegen die Tragschiene 22 an.

Allgemein ausgedrückt führen die Transportwagen 20 jeweils ein eigenes Antriebssystem mit sich, so dass die Transportwagen 20 unabhängig voneinander angetrieben und verfahren werden können. Bei dem vorliegenden Ausführungsbeispiel ist das eigene Antriebssystem durch die Antriebrollen 44.1, 44.2 die zugehörigen Antriebsmotoren 48.1, 48.2 ausgebildet.

Neben den hier erläuterten Transportwagen 20 mit eigenem Antriebssystem können gegebenenfalls auch andere Transportwagen vorhanden sein, welche durch ein zentrales Antriebssystem angetrieben werden. Beispielsweise kann ein solches zentrales Antriebssystem durch einen Kettenzug oder dergleichen ausgebildet sein. Die hier erläuterten Transportwagen 20 können entsprechend auch unabhängig von anderen Antriebseinrichtungen angetrieben und verfahren werden.

Um zu verhindern, dass die Vorläufereinheit 32 in Transportrichtung 30 verkippt, d.h. um eine horizontale Achse senkrecht zur Transportrichtung 30, lagert die Fahrwerkeinheit 42.1 der Vorläufereinheit 32 in einem Abstand von der Antriebsrolle 44.1 eine passive Stützrolle 50.1, welche ebenfalls auf der Antriebslauffläche 46 der Tragschiene 22 abrollt. Außerdem lagert die Fahrwerkeinheit 42.1 der Vorläufereinheit 32 mehrere seitliche Führungsrollen 52.1, von denen nur zwei ein Bezugszeichen tragen und welche von beiden Seiten an der Tragschiene 22 anliegen und so in an und für sich bekannter Art und Weise ein Verkippen der Vorläufereinheit 32 zur Seite verhindern.

Beim vorliegenden Ausführungsbeispiel umfasst die Vorläufereinheit 32 einen Antriebsrahmen 54.1, welcher die Antriebsrolle 44.1 mit dem Antriebsmotor 48.1 und zu beiden Seiten der Tragschiene 22 je vier Führungsrollen 52.1 lagert. Der Antriebsrahmen 54.1 ist über eine Stütztraverse 56.1 gelenkig mit einen Stützrahmen 58.1 verbunden, welcher seinerseits die Stützrolle 50.1 und ebenfalls zu beiden Seiten der Tragschiene 22 je vier Führungsrollen 52.1 lagert. Die gelenkige Verbindung des Antriebsrahmens 54.1 mit dem Stützrahmen 58.1 erfolgt über nicht eigens mit einem Bezugszeichen versehene Kupplungsgelenke, die eine Durchfahrt von Kurvenabschnitten der Tragschiene 24.

Beim vorliegenden Ausführungsbeispiel lagern sowohl die Vorläufereinheit 32 als auch die Nachläufereinheit 34 jeweils eine Antriebsrolle 44.1 bzw. 44.2 sowie den jeweils zugehörigen Antriebsmotor 48.1, 48.2. Bei einer nicht eigens gezeigten Abwandlung kann es ausreichen, wenn nur an der Vorläufereinheit 32 eine Antriebsrolle 44.1 mit Antriebsmotor 48.1 vorhanden ist. Das Transportwagen-Fahrwerk 28 des Transportwagens 20 jedenfalls lagert wenigstens eine Antriebsrolle und führt deren Antriebsmotor mit sich.

Für die Energieversorgung der Antriebsmotoren 48.1 und 48.2 der Vorläufereinheit 32 und der Nachläufereinheit 34 führt der Transportwagen 20 eine autarke Energieversorgungseinrichtung 60 mit sich. Darunter ist eine Energieversorgungseinrichtung zu verstehen, welche die Energieversorgung der Antriebsmotoren 48.1, 48.2 im Fahrbetrieb, d.h. während der Bewegung des Transportwagens 20, unabhängig von externen Energiequellen sicherstellt.

Beim vorliegenden Ausführungsbeispiel ist die Energieversorgungseinrichtung 60 mit wiederaufladbaren Energiespeichern 62 mit wenigstens einer Energiespeichereinheit 64 konzipiert. An jeder Fahrwerkeinheit 42.1, 42.2 ist dabei eine Energiespeichereinheit 64 für den jeweiligen Antriebsmotor 48.1, 48.2 vorhanden. Eine wiederaufladbare Energiespeichereinheit 64 für elektrische Energie kann in Form eines Akkumulators oder eines Kondensators bereitgestellt sein. Bei einer nicht eigens gezeigten Abwandlung kann auch nur eine einzige Energiespeichereinheit für beide Antriebsmotoren 48.1, 48.2 vorgesehen sein. Alternativ können auch Druckgasspeicher als Energiequelle für Druckgasantriebe vorhanden sein.

Die Nachläufereinheit 36 trägt außerdem eine Steuereinrichtung 66, mittels welcher die Antriebsmotoren 48.1, 48.2 angesteuert und synchronisiert werden. Die Steuereinrichtung 66 kommuniziert mit einer nicht eigens gezeigten Zentralsteuerung der Anlage 10.

Wie in Figur 2 zu erkennen ist, umfasst der Trockner 16 ein Gehäuse 68, welches als Temperiertunnel einen Trockentunnel 70 begrenzt und Seitenwände 72, eine Decke 74 und einen Tunnelboden 76 umfasst. Der Tunnelboden 76 weist einen zu der Verbindungseinrichtung 36 der Transportwagen 20 komplementären Verbindungsdurchgang 78 auf, der zu einem unterhalb des Trockentunnels 70 angeordneten Fahrraum 80 für das Transportwagen-Fahrwerk 28 führt, in welchem das Schienensystem 22 untergebracht ist.

Bei der Einfahrt eines mit einem Werkstück 12 beladenen Transportwagens 20 in den Trockner 16 wird die Verbindungseinrichtung 36 des Transportwagens 20 also gleichsam in den Verbindungsdurchgang 78 des Tunnelbodens 76 eingefädelt. Wenn die Werkstücke 12 dann durch den Trockentunnel 70 gefördert werden, bewegt sich das Transportwagen-Fahrwerk 28 im Fahrraum 80 und führt die Befestigungseinrichtung 26 im Trockentunnel 70 mit sich, wobei sich die Verbindungseinrichtung 36, d.h. beim vorliegenden Ausführungsbeispiel die Gelenkstreben 38 und 40, durch den Verbindungsdurchgang 78 im Tunnelboden 76 hindurch erstreckt.

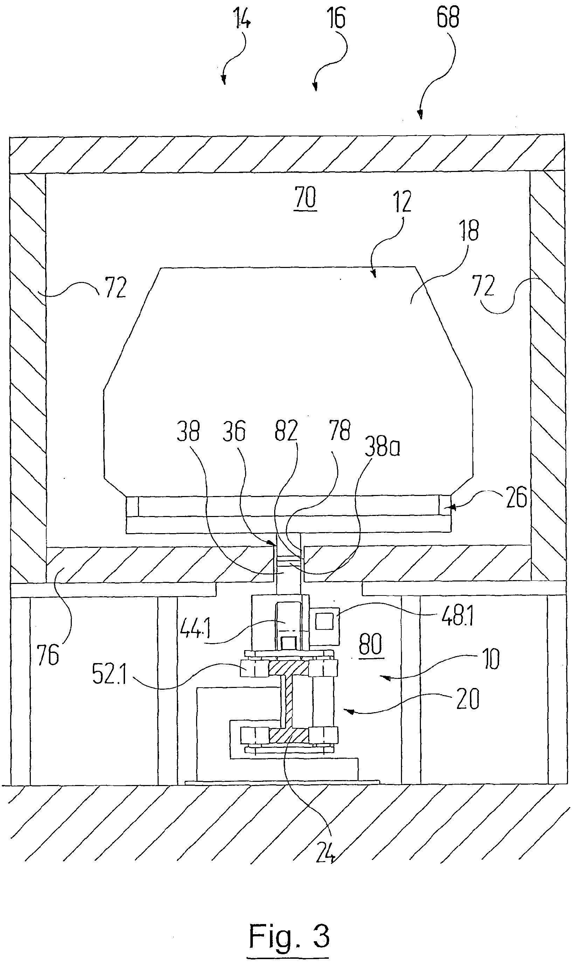

Wie insbesondere in Figur 3 zu erkennen ist, ist der Verbindungsdurchgang 78 beim bekannten Temperiervorrichtung passend zu den vertikal verlaufenden Gelenkstreben 38, 40 als vertikaler Durchgangsschlitz 82 ausgebildet. In diesem Fall kann die Tunnelatmosphäre bei entsprechenden Strömungsverhältnissen weitgehend ungehindert aus dem Trockentunnel 70 durch den Verbindungsdurchgang 78 nach unten in den Fahrraum 80 einströmen.

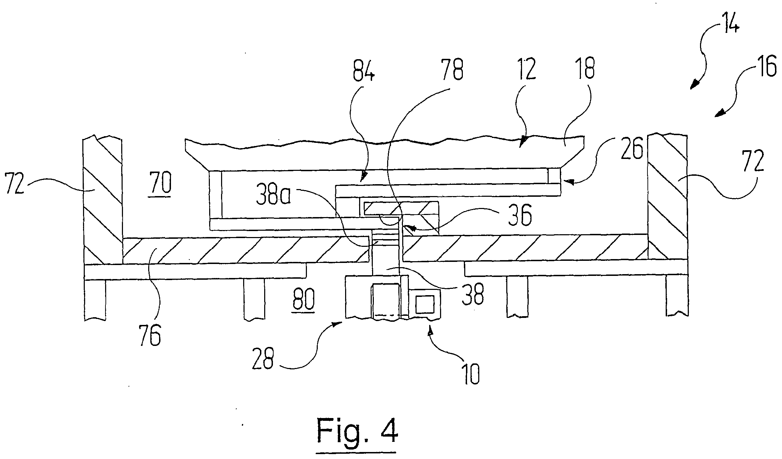

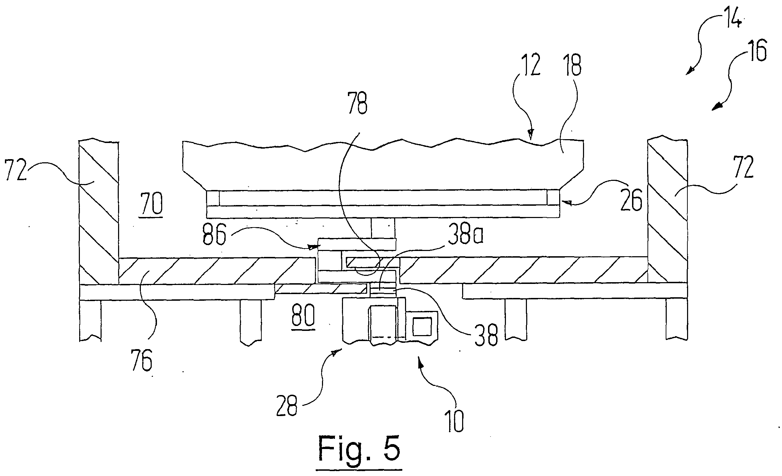

Um ein solches Ausströmen der Tunnelatmosphäre aus dem Trockentunnel 70 zumindest zu erschweren, kann der Verbindungsdurchgang 78 zu einer Art Labyrinthdichtung abgewandelt werden, beispielsweise in der Art, wie es die Figuren 4 und 5 veranschaulichen.

Bei dem in Figur 4 gezeigten Ausführungsbeispiel ist der Verbindungsdurchgang 78 nicht geradlinig und öffnet nicht in Richtung nach oben zum Trockentunnel. Vielmehr hat der Verbindungsdurchgang 78 im Querschnitt einen einfach gewinkelten Verlauf, so dass er zum Trockentunnel 70 hin zur seitlich offen ist. Die Befestigungseinrichtung 26 und die Verbindungseinrichtung 36 des Transportwagens 20 sind nun derart aneinander angepasst, dass die Befestigungseinrichtung 26 den Verbindungsdurchgang 78 gleichsam umgreifen kann. Hierzu ist das Tragprofil 27 der Befestigungseinrichtung 26 entsprechend zur Längsmittelebene unsymmetrisch ausgebildet, wie es Figur 4 bei dem Bezugszeichen 84 veranschaulicht. Bei dem in Figur 5 gezeigten Ausführungsbeispiel hat der Verbindungsdurchgang 78 einen zweifach gewinkelten Verlauf. Dort umfassten die Gelenkstreben 38, 40 oberhalb ihres Gelenks 38a bzw. 40a einen C-förmigen Abschnitt 86, welche dem Verlauf des Verbindungsdurchganges 78 folgen.

Bei den in den Figuren 1 bis 5 gezeigten bekannten Temperiervorrichtungen kann Wärme aus dem Trockentunnel 70 durch den Verbindungsdurchgang 78 nach unten in den Fahrraum 80 und auf ein dort befindliches Transportwagen-Fahrwerk 28 abgestrahlt werden. Dies kann insbesondere die Antriebsmotoren 48 der Transportwagen 20 belasten. Bei ungünstigen Strömungsverhältnissen kann auch heiße und gegebenenfalls aggressive Tunnelatmosphäre durch den Verbindungsdurchgang 78 in den Fahrraum 80 gelangen. Daher sind Abschirmmittel 88 vorgesehen, durch welche ein Kontakt wenigstens der Transportwagen-Fahrwerke 28 mit der Tunnelatmosphäre durch den Verbindungsdurchgang 78 hindurch zumindest vermindert wird. Ebenso wird das Nachströmen von Atmosphäre aus dem Fahrraum 80 in den Trockentunnel 70 reduziert, um eine stabile Atmosphäre im Trockentunnel 70 aufrechtzuerhalten. Dies wird anhand von Ausführungsbeispielen von Abschirmmitteln 88 bei dem geradlinigen Verbindungsdurchgang 78 nach den Figuren 1 bis 3 erläutert.

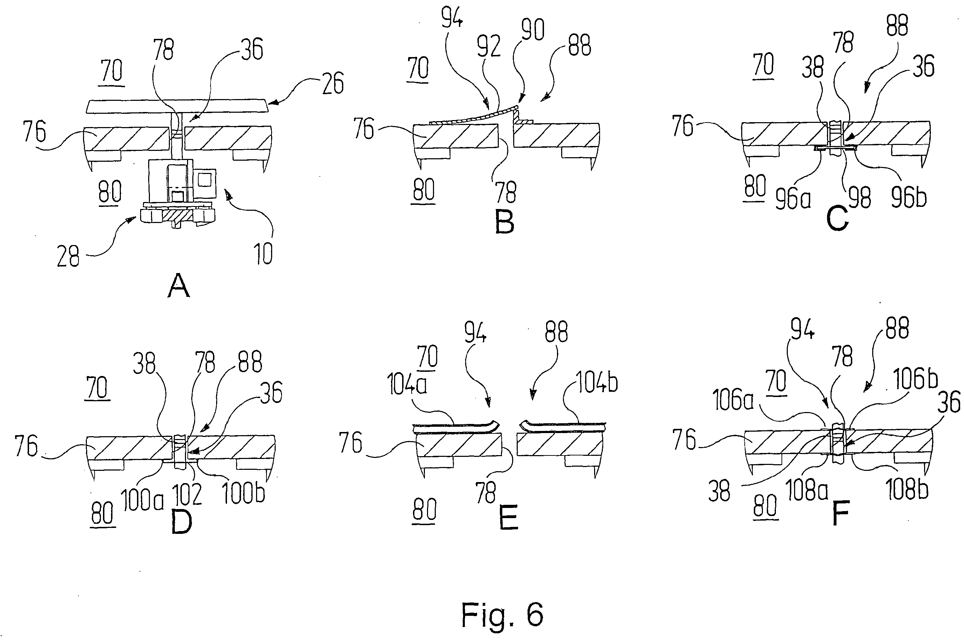

Figur 6A veranschaulicht nochmals diesen geradlinigen Verbindungsdurchgang 78 mit dem Transportwagen 20 und dessen Transportwagen-Fahrwerk 28 gemäß dem Schnitt und dem Ausführungsbeispiel nach Figur 3. Die Figuren 6B bis 6F zeigen verschiedene Ausführungsbeispiele von Abschirmmitteln 88.

Figur 6B zeigt Abschirmmittel 88 in Form einer Schuppendichtung 90, bei welcher ein Vielzahl von Dichtlamellen 92 in Längsrichtung des Trockentunnels 70 überlappend so angeordnet sind, dass sie den Verbindungsdurchgang 78 am Tunnelboden 76 abdecken. Die Dichtlamellen 92 sind in der Praxis aus einem biegbaren Blech oder einem temperaturbeständigen biegbaren Kunststoff gefertigt. Wenn der Transportwagen 20 in den Trockner 16 einfährt, gelangen die Gelenkstreben 38, 40 in den Verbindungsdurchgang 78 und drücken die Dichtlamellen 92 in an und für sich bekannter Art und Weise aus dem Weg, so dass immer nur im Bereich der Gelenkstreben 38, 40 ein kleines Durchtrittsfenster für Tunnelatmosphäre vorhanden ist. Durch die Schuppendichtung 90 kann über die gesamte Länge des Trockentunnels 70 der Effekt zumindest vermindert werden, dass Wärmestrahlung und/oder Tunnelatmosphäre nach unten in den Fahrraum 80 austritt. Die Abschirmmittel 88 bilden so eine Dichteinrichtung 94.

Figur 6C zeigt ein Ausführungsbeispiel, bei welchem die Abschirmmittel 88 nur lokal für den Bereich der Antriebsmotoren 48.1, 48.2 der Transportwagen 20 wirken. Hierzu umfassen die Abschirmmittel 88 zwei Schienen 96a, 96b mit C-förmigen Querschnitt, welche den Verbindungsdurchgang 78 auf der dem Fahrraum 80 zugewandten Seite des Tunnelbodens 76 so flankieren, dass ihre offenen Seiten aufeinander zuweisen. Außerdem umfassen die Abschirmmittel 88 an jeder Gelenkstrebe 38, 40 einen Abschirmkragen 98, der komplementär zu den Schienen 96a, 96b ausgebildet ist. Die Abschirmkragen 98 sind oberhalb der Antriebsmotoren 48.1, 48.2 angeordnet und decken diese weitgehend ab, so dass die Antriebsmotoren 48.1, 48.2 zumindest gegen Wärmestrahlung aus dem Trockentunnel 70 geschützt sind. Beim Einfahren in den Trockner 16 werden die Abschirmkragen 98 an den Gelenkstreben 38, 40 in die Schienen 96a, 96b geführt, so dass sich an den Bereichen, in denen die Abschirmkragen 98 in die Schienen 96a, 96b eingreifen, eine Art Labyrinthdichtung ausbildet.

Wenn die Streckenführung im Trockner 16 lediglich für eine Geradeausfahrt konzipiert ist, können die Abschirmkragen 98 in Längsrichtung des Trockentunnels 70 länger ausgebildet sein, als quer dazu. Wenn eine Kurvenfahrt im Trockner 16 angedacht ist, sind die Abschirmkragen 98 als kreisrunde Scheibe ausgebildet.

Figur 6D zeigt ein weiteres Ausführungsbeispiel, bei welchem die Abschirmmittel 88 nur lokal für den Bereich der Antriebsmotoren 48.1, 48.2 der Transportwagen 20 wirken. Hierzu umfassen die Abschirmmittel 88 zwei Schleifleisten 100a, 100b, welche den Verbindungsdurchgang 78 auf der dem Fahrraum 80 zugewandten Seite des Tunnelbodens 76 flankieren. Außerdem umfassen die Abschirmmittel 88 an jeder Gelenkstrebe 38, 40 einen Schleifkragen 102, der komplementär zu den Schleifleisten 100a, 100b ausgebildet ist und von unten gegen diese andrücken kann, wenn sich das Transportwagen-Fahrwerk 28 im Fahrraum 80 befindet. Die Schleifkragen 102 sind oberhalb der Antriebsmotoren 48.1, 48.2 angeordnet und decken diese weitgehend ab, so dass die Antriebsmotoren 48.1, 48.2 zumindest gegen Wärmestrahlung aus dem Trockentunnel 70 geschützt sind.

Figur 6E zeigt dagegen wieder ein Ausführungsbeispiel, bei dem die Abschirmmittel 88 eine Dichteinrichtung 94 ausbilden, welche über die gesamte Länge des Trockentunnels 70 den Effekt zumindest vermindert kann, dass Wärmestrahlung und/oder Tunnelatmosphäre nach unten in den Fahrraum 80 austritt. Dort sind auf der dem Trockentunnel 70 zugewandten Seite des Tunnelbodens 76 Düsen 104a, 104b angeordnet, welche den Verbindungsdurchgang 78 zu beiden Seiten flankieren. Es gibt jeweils eine Vielzahl von Düsen 104a und 104b, welche längs des Verbindungsdurchgangs 78 in regelmäßigen Abständen angeordnet sind. Durch die Düsen 104a, 104b wird ein Trennfluid aus einer nicht eigens gezeigten Fluidquelle, z.B. Luft oder auch ein Inertgas, oberhalb des Verbindungsdurchganges 78 in den Trockentunnel 70 eingeblasen, wodurch eine Art Luftdichtung am Verbindungsdurchgang 78 gebildet ist. Die Austrittsöffnungen der Düsen 104a, 104b sind dabei so ausgerichtet, dass das Trennfluid mit einer Strömungskomponente nach oben in den Trockentunnel 70 eingeblasen wird. Bei nicht eigens gezeigten Abwandlungen können die Austrittsöffnungen auch anders ausgerichtet sein. Zum Beispiel können günstigere Strömungsverhältnisse am Verbindungsdurchgang 78 vorliegen, wenn die gegenüberliegenden Austrittsöffnungen der Düsen 104a, 104b horizontal ausgerichtet sind.

Figur 6F zeigt ein weiteres Ausführungsbeispiel, bei dem die Abschirmmittel 88 eine Dichteinrichtung 94 ausbilden, welche über die gesamte Länge des Trockentunnels 70 wirkt. Dort sind am Tunnelboden 76 sowohl auf der Seite zum Trockentunnel 70 als auch auf der Seite zum Fahrraum 80 Bürsten 106a, 106b bzw. 108a, 108b angeordnet, welche am Verbindungsdurchgang 78 aufeinander zuweisen und den Verbindungsdurchgang 78 abdecken. Die Bürsten 106a, 106b, 108a, 108b umgreifen die Verbindungseinrichtung 36 des Transportwagens 20, im vorliegenden Fall also die Gelenkstreben 38, 40, wenn der Transportwagen 20 den Trockner 16 durchfährt.

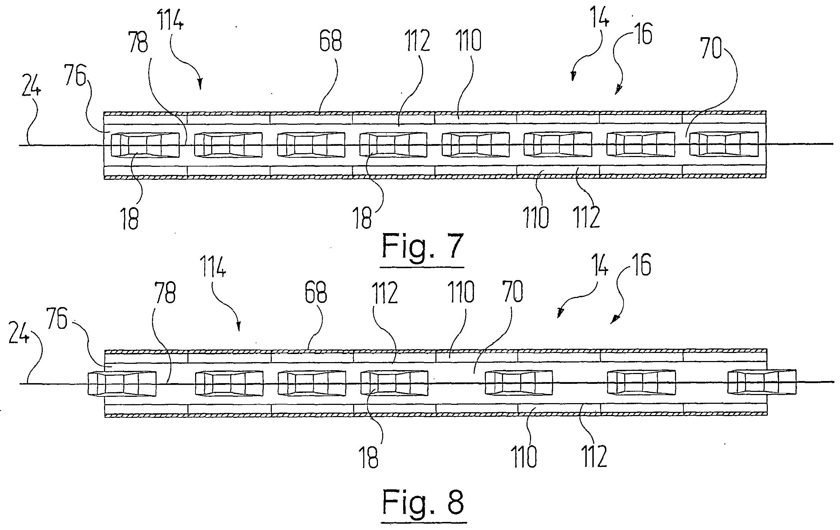

Dadurch, dass die vorhandenen Transportwagen 20 unabhängig voneinander und unabhängig von anderen Antriebseinrichtungen angetrieben und verfahren werden können, kann der Betrieb des Trockners 16 und die Art und Weise der Wegführung und Verweildauer der Werkstücke 12 individuell auf die zu trocknenden Gegenstände 12 abgestimmt werden. Dies ist in den Figuren 7 bis 11 veranschaulicht, in denen unterschiedliche Abschnitte des Trockentunnels 70 gezeigt sind.

Die Figuren 7 bis 11 veranschaulichen ein an und für sich bekanntes Trocknerkonzept, bei dem heiße und vorkonditionierte Luft aus Lufträumen 110, die zu beiden Seiten des Trockentunnels 70 im Gehäuse 68 untergebracht sind, in den Trockentunnel 70 eingeblasen wird. Hierzu sind die Lufträume 110 und der Trockentunnel 70 durch Zwischenwände 112 getrennt, in denen entsprechende Luftdurchlässe vorhanden sind, die hier nicht eigens gezeigt sind.

Figur 7 zeigt einen Trockentunnel-Abschnitt 114 im konventionellen Betrieb, bei dem die Fahrzeugkarosserien 18 unter Einhaltung gleicher Abstände und mit gleicher Geschwindigkeit durch den Trockentunnel 70 gefahren werden. In diesem Fall sind die Durchsätze an der Eingangsseite und der Ausgangsseite des Trockner 16 gleich groß.

Wenn es auf Grund von Schwierigkeiten bei einer dem Trockenvorgang vorgelagerten Behandlung zu Verzögerungen oder Unterbrechungen kommt, kann es vorkommen, dass der Durchsatz an der Eingangsseite nicht mehr kontinuierlich aufrechterhalten werden kann. Figur 8 veranschaulicht eine solche Situation. In diesem Fall können aufeinanderfolgende Transportwagen 20 mit unterschiedlichen Abständen durch den Trockentunnel 70 gefahren werden, da die Transportwagen 20 unabhängig voneinander verfahren werden können. Dies kann auch gezielt erfolgen, ohne dass es eine diskontinuierliche Zufuhr am Trocknereingang gibt. Die Fahrzeugkarosserien 18 können individuell getaktet oder kontinuierlich mit unterschiedlichen Verweilzeiten und Geschwindigkeiten durch den Trockner 16 gefahren werden. Beispielsweise können unterschiedliche Verweilzeiten abhängig vom zu trocknenden Beschichtungsmaterial und/oder der Art der Fahrzeugkarosserie 18 erforderlich sein, im letzteren Fall können massereiche Fahrzeugkarosserien 18 beispielsweise eine längere Verweilzeit im Trockner 16 erfordern als demgegenüber masseärmere Fahrzeugkarosserien 18. Ein darauf abgestimmter Ein- und Auslauf der Fahrzeugkarosserien 18 ist möglich, da die Transportwagen 20 individuell und unabhängig voneinander bewegt werden können.

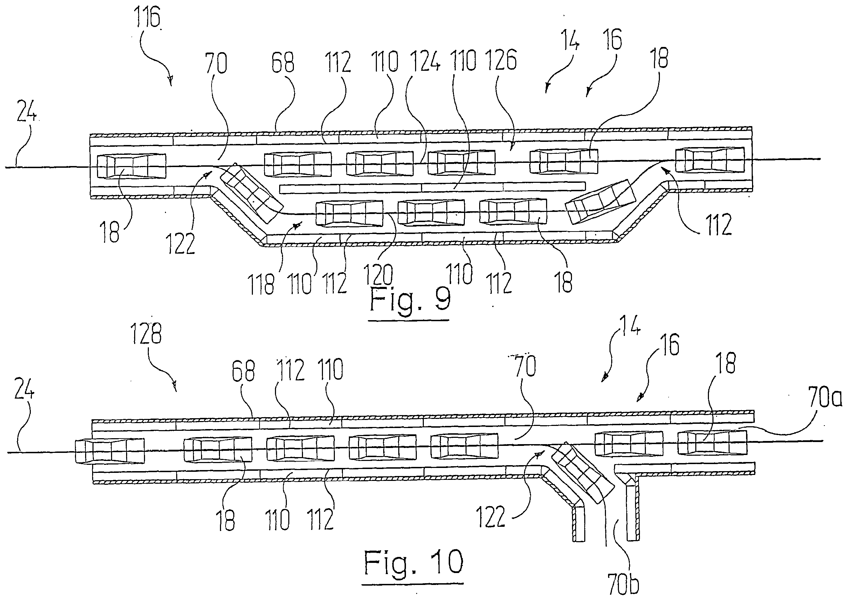

Figur 9 veranschaulicht einen Trockentunnel-Abschnitt 116 mit einer integrierten Sekundärzone 118, bei der eine Sekundärstrecke 120 über Weichen 122 für die Tragschiene 24 im Fahrraum 80 von einer Primärstrecke 124 in einer Primärzone 126 im Trockentunnel 70 abzweigt. Hierzu zweigt sich der Verbindungdurchgang 78 im Weichenbereich entsprechend auf. Die Weichen 118 können beispielsweise als an und für sich bekannte Verschiebeweichen ausgebildet sein. Die Transportwagen 20 können über die dortigen Weichen 122 hintereinander in die Sekundärstrecke 120 einfahren. Die Sekundärzone 118 kann beispielsweise als Puffer für Fahrzeugkarossen 18 dienen, die eine längere Verweilzeit benötigen. Wenn sich diese Fahrzeugkarosserien in der Sekundärzone 118 langsamer bewegen als die Fahrzeugkarosserien 18 in der Primärzone 126, werden sie von letzteren gleichsam im Trockentunnel 70 überholt und dann am Ende der Sekundärstrecke 120 wieder auf die Primärstrecke 124 geführt.

Figur 10 veranschaulicht einen Verzweigungs-Abschnitt 128 des Trockentunnels 70 in zwei Trockentunnelarme 70a, 70b. Auch dort ist im Fahrraum 80 eine entsprechende Weiche 122 für die Tragschiene 24 vorhanden und verzweigt der Verbindungsdurchgang 78 entsprechend. Verschiedene Tunnelarme können beispielsweise günstig sein, wenn verschiedene Fahrzeugkarosserien 18 unterschiedliche Trocknungsparameter benötigen und beispielsweise mit unterschiedlichen Temperaturen beaufschlagt werden müssen. Einer der Trockentunnelarme 70a, 70b kann hierzu auch als Sackgasse ausgebildet sein. Bis zum Erreichen der Verzweigung werden alle Fahrzeugkarosserien 18 mit einheitlichen Parametern vorerwärmt, um dann im jeweils spezifischen Trockentunnelarm 70a oder 70b unter definierten Bedingungen zu trocknen.

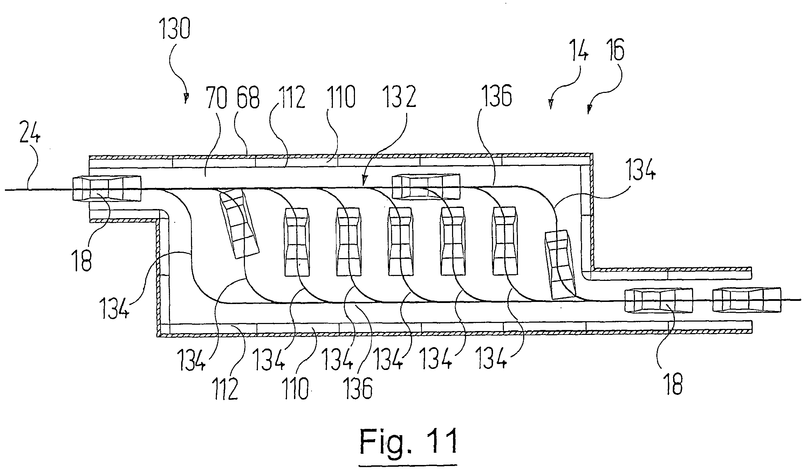

Figur 11 veranschaulicht eine Trockenzone 130 mit einer Pufferanordnung 132, bei der mehrere parallele Sekundärstränge 134 vorhanden sind, die über Weichen 122 mit zwei Primärsträngen 136 verbunden sind. Zur Verbesserung der Luftführung können zwischen den Sekundärsträngen 134 noch Lufträume 106 oder andere Luftauslässe vorgesehen sein. Auf den Sekundärsträngen 134 können Fahrzeugkarosserien 18 beispielsweise gleichsam geparkt werden, wenn diese zum Beispiel eine besonders lange Verweildauer in dem Trockner 16 benötigen.

Wie insbesondere anhand der Figuren 9 und 11 ersichtlich ist, kann bei dem erläuterten Transportsystem 20 der Trockentunnel 70 in Transportrichtung 30 verbreitert werden und die Grundfläche des Trockentunnels 70 quer zur Transportrichtung 30 vergrößert werden, so dass in Transportrichtung 30 mehr Fahrzeugkarosserien 18 aufgenommen werden können als ohne eine solcher Aufweitung des Trockentunnels 70. Hierdurch wird die durch die Außenwände des Trockners 16 vorgegebene Außenfläche im Verhältnis zu den untergebrachten Fahrzeugkarosserien 18 verringert, so dass die Wärmeverluste über die Außenwände bezogen auf die Anzahl der Fahrzeugkarosserien 18 reduziert sind.

Eine Änderung der Grundfläche des Trockentunnels 70 gegenüber bekannten geradlinigen Durchlauf-Trockner kann einerseits durch eine verzweigte Streckenführung verwirklicht werden, wie es die Figuren 9 und 11 veranschaulichen. Wie oben erläutert ist, sind die Transportwagen 20 kurvengängig, weshalb sie andererseits auch ohne Verzweigung in Kurven durch den Trockentunnel 70 gefördert werden können. Hierbei können die Transportwagen 20 beispielsweise mäanderförmig bewegt werden. Auch kann der Transporttunnel 70 eine Richtungsänderung vorgeben und gewinkelt oder in einem Bogen verlaufen. Richtungsänderungen im Trockentunnel 70 sind somit stets auch bei kontinuierlicher Bewegung der Transportwagen 20 in Transportrichtung 30 möglich.

Die Geometrie des Trockentunnels 70 kann somit insgesamt weitgehend beliebig gewählt und an die örtlichen Gegebenheiten angepasst werden.

## Patentansprüche

1. Temperiervorrichtung zum Temperieren von Werkstücken (12), insbesondere zum Trocknen von Fahrzeugkarosserien (18), mit
a) einem Gehäuse (68);
b) einem in dem Gehäuse (68) untergebrachten Temperiertunnel (70) mit einem Tunnelboden (76);
c) einem Transsportsystem (10), welches eine Vielzahl von Transportwagen (20) umfasst, die in einer Transportrichtung (30) auf einem Schienensystem (22) verfahrbar sind und mittels denen die Werkstücke (12) durch den Temperiertunnel (70) transportierbar sind, wobei jeder Transportwagen (20) ein Transportwagen-Fahrwerk (28) und eine Befestigungseinrichtung (26) für zumindest ein Werkstück (12) umfasst, die mittels einer Verbindungseinrichtung (36) miteinander gekoppelt sind,
wobei
d) die Transportwagen (20) jeweils ein eigenes Antriebssystem (44.1, 44.2, 48.1, 48.2) mit sich führen, so dass die Transportwagen (20) unabhängig voneinander antreibbar und verfahrbar sind;
e) der Tunnelboden (76) einen Verbindungsdurchgang (78) aufweist und ein unterhalb des Temperiertunnels (70) angeordneter Fahrraum (80) für das Transportwagen-Fahrwerk (28) vorhanden ist, derart, dass das Transportwagen-Fahrwerk (28) im Fahrraum (80) bewegbar ist, wobei die Befestigungseinrichtung (26) im Temperiertunnel (70) mitgeführt wird und sich die Verbindungseinrichtung (36) durch den Verbindungsdurchgang (78) hindurch erstreckt,
**dadurch gekennzeichnet, dass**
f) Abschirmmittel (88) vorgesehen sind, durch welche ein Kontakt wenigstens der Transportwagen-Fahrwerke (28) mit der Tunnelatmosphäre durch den Verbindungsdurchgang (78) hindurch zumindest vermindert wird.

2. Temperiervorrichtung nach Anspruch 1, **dadurch gekennzeichnet, dass** das Antriebssystem (44.1, 44.2, 48.1, 48.2) wenigstens eine Antriebsrolle (44.1, 44.2) umfasst, die von dem Transportwagen-Fahrwerk (28) gelagert und auf einer Antriebslauffläche (46) des Schienensystem (22) abrollbar ist, und wenigstens einen Antriebsmotor (48.1, 48.2) für die wenigstens eine Antriebsrolle (44.1, 44.2) umfasst, welcher von dem Transportwagen-Fahrwerk (28) mitgeführt wird.

3. Temperiervorrichtung nach Anspruch 2, **dadurch gekennzeichnet, dass** der Transportwagen (20) eine autarke Energieversorgungseinrichtung (60) mit sich führt, mittels welcher der wenigstens eine Antriebsmotor (48.1, 48.2) mit Energie versorgbar ist.

4. Temperiervorrichtung nach Anspruch 3, **dadurch gekennzeichnet, dass** die autarke Energieversorgungseinrichtung (60) wenigstens einen wiederaufladbaren Energiespeicher (62) umfasst.

5. Temperiervorrichtung nach einem der Ansprüche 1 bis 4, **dadurch gekennzeichnet, dass** der Verbindungsdurchgang (78) geradlinig oder gewinkelt ist.

6. Temperiervorrichtung nach einem der Ansprüche 1 bis 5, **dadurch gekennzeichnet, dass** das Transportwagen-Fahrwerk (28) eine in Transportrichtung (30) vorauseilende Vorläufereinheit (32) und eine in Transportrichtung (30) nacheilende Nachläufereinheit (34) umfasst.

7. Temperiervorrichtung nach Anspruch 6, **dadurch gekennzeichnet, dass** die Verbindungseinrichtung (36) wenigstens zwei vertikale Gelenkstreben (38, 40) umfasst, welche die Vorläufereinheit (32) und die Nachläufereinheit (34) mit der Befestigungseinrichtung (26) koppeln.

## Claims

1. Temperature control device for controlling the temperature of workpieces (12), in particular for drying vehicle bodies (18), having
a) a housing (68);
b) a temperature control tunnel (70) which is accommodated in the housing (68) and has a tunnel floor (76);
c) a transport system (10), which comprises a plurality of transport carriages (20), which can be moved in a transport direction (30) on a rail system (22) and by means of which the workpieces (12) can be transported through the temperature control tunnel (70), wherein each transport carriage (20) comprises a transport-carriage chassis (28) and a securing device (26) for at least one workpiece (12), which are coupled to one another by means of a connecting device (36),
wherein
d) the transport carriages (20) each carry along a separate drive system (44.1, 44.2, 48.1, 48.2) so that the transport carriages (20) can be driven and moved independently of one another;
e) the tunnel floor (76) has a connecting passage (78), and a driving space (80), arranged below the temperature control tunnel (70), is available for the transport-carriage chassis (28) such that the transport-carriage chassis (28) can be moved in the driving space (80), wherein the securing device (26) is carried along in the temperature control tunnel (70) and the connecting device (36) extends through the connecting passage (78),
**characterized in that**
f) shielding means (88) are provided, by means of which the contact at least between the transport-carriage chassis (28) and the tunnel atmosphere through the connecting passage (78) is at least lessened.

2. Temperature control device according to Claim 1, **characterized in that** the drive system (44.1, 44.2, 48.1, 48.2) comprises at least one drive roller (44.1, 44.2), which is supported by the transport-carriage chassis (28) and can roll along a drive running surface (46) of the rail system (22), and comprises at least one drive motor (48.1, 48.2) for the at least one drive roller (44.1, 44.2), which is carried along by the transport-carriage chassis (28).

3. Temperature control device according to Claim 2, **characterized in that** the transport carriage (20) carries along a self-sufficient energy supply device (60) by means of which the at least one drive motor (48.1, 48.2) can be supplied with energy.

4. Temperature control device according to Claim 3, **characterized in that** the self-sufficient energy supply device (60) comprises at least one rechargeable energy store (62).

5. Temperature control device according to one of Claims 1 to 4, **characterized in that** the connecting passage (78) is linear or angled.

6. Temperature control device according to one of Claims 1 to 5, **characterized in that** the transport-carriage chassis (28) comprises a leading unit (32) running in front in the transport direction (30) and a following unit (34) running behind the transport direction (30).

7. Temperature control device according to Claim 6, **characterized in that** the connecting device (36) comprises at least two vertical jointed struts (38, 40), which couple the leading unit (32) and the following unit (34) to the securing device (26) .

## Revendications

1. Dispositif de régulation thermique pour réguler la température de pièces (12), notamment dévolu au séchage de carrosseries (18) de véhicules, comprenant
a) une enceinte (68) ;
b) un tunnel (70) de régulation thermique, intégré dans ladite enceinte (68) et pourvu d'un fond (76) ;
c) un système de transport (10) incluant une multiplicité de chariots de transport (20) qui peuvent être déplacés sur un système (22) à rail, dans une direction de transport (30), et au moyen desquels les pièces (12) peuvent être acheminées à travers ledit tunnel (70) de régulation thermique, chaque chariot de transport (20) comprenant un châssis de roulement (28) et un dispositif de fixation (26) affecté à au moins une pièce (12), qui sont couplés l'un à l'autre au moyen d'un dispositif de liaison (36),
sachant que
d) les chariots de transport (20) charrient conjointement un propre système d'entraînement (44.1, 44.2, 48.1, 48.2) respectif, de sorte que lesdits chariots de transport (20) peuvent être entraînés et déplacés indépendamment les uns des autres ;
e) le fond (76) du tunnel de régulation thermique comporte un corridor de liaison (78), et un espace de déplacement (80) est présent au-dessous dudit tunnel (70) de régulation thermique et est dédié au châssis de roulement (28) des chariots de transport, de façon telle que ledit châssis de roulement (28) des chariots de transport puisse se mouvoir dans ledit espace de déplacement (80), le dispositif de fixation (26) étant charrié conjointement dans ledit tunnel (70) de régulation thermique, et le dispositif de liaison (36) parcourant de part en part ledit corridor de liaison (78),
**caractérisé par**
f) la présence de moyens (88) formant écran et par lesquels un contact, entre au moins les châssis de roulement (28) des chariots de transport et l'atmosphère du tunnel, est pour le moins atténué sur l'intégralité de l'étendue du corridor de liaison (78).

2. Dispositif de régulation thermique selon la revendication 1, **caractérisé par le fait que** le système d'entraînement (44.1, 44.2, 48.1, 48.2) inclut au moins un rouleau d'entraînement (44.1, 44.2) auquel le châssis de roulement (28) des chariots de transport procure un montage, et qui peut évoluer sur une surface de roulement d'entraînement (46) du système (22) à rail ; et au moins un moteur d'entraînement (48.1, 48.2) qui est destiné audit rouleau d'entraînement (44.1, 44.2), à présence minimale, et est charrié conjointement par ledit châssis de roulement (28) des chariots de transport.

3. Dispositif de régulation thermique selon la revendication 2, **caractérisé par le fait que** le chariot de transport (20) charrie conjointement un dispositif autonome (60) d'alimentation en énergie au moyen duquel le moteur d'entraînement (48.1, 48.2), à présence minimale, peut être alimenté en énergie.

4. Dispositif de régulation thermique selon la revendication 3, **caractérisé par le fait que** le dispositif autonome (60) d'alimentation en énergie renferme au moins un accumulateur d'énergie (62) rechargeable.

5. Dispositif de régulation thermique selon l'une des revendications 1 à 4, **caractérisé par le fait que** le corridor de liaison (78) est rectiligne ou coudé.

6. Dispositif de régulation thermique selon l'une des revendications 1 à 5, **caractérisé par le fait que** le châssis de roulement (28) des chariots de transport inclut un ensemble unitaire précurseur (32) à action anticipée dans la direction de transport (30), et un ensemble unitaire suiveur (34) à action retardée dans ladite direction de transport (30).

7. Dispositif de régulation thermique selon la revendication 6, **caractérisé par le fait que** le dispositif de liaison (36) comprend au moins deux entretoises verticales articulées (38, 40), couplant l'ensemble unitaire précurseur (32) et l'ensemble unitaire suiveur (34) au dispositif de fixation (26).
